# EUROPÄISCHE PATENTSCHRIFT

(11) **EP 4 173 797 B1**
(45) Veröffentlichungstag und Bekanntmachung des Hinweises auf die Patenterteilung: **21.08.2024**
(21) Anmeldenummer: 22204151.9
(22) Anmeldetag: 27.10.2022
(51) Int. Cl.: B29C 49/42, B29C 49/78, B29C 49/06, B29C 49/12, B29K 67/00, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT VERSTELLBARER DROSSEL**
DEVICE AND METHOD FOR REFORMING PLASTIC PREFORMS INTO PLASTIC CONTAINERS WITH AN ADJUSTABLE THROTTLE
DISPOSITIF ET PROCÉDÉ DE FORMAGE D'ÉBAUCHES EN PLASTIQUE EN RÉCIPIENTS EN PLASTIQUE DOTÉS D'UN ÉTRANGLEMENT RÉGLABLE

(30) Priorität: 28.10.2021 DE 102021128205
(43) Veröffentlichungstag der Anmeldung: 03.05.2023
(73) Patentinhaber: Krones AG, 93073 Neutraubling (DE)
(72) Erfinder: Hengl, Benedikt, 93073 Neutraubling (DE); Brunner, Andreas, 93073 Neutraubling (DE); Finger, Dieter, 93073 Neutraubling (DE); Kulzer, Markus, 93073 Neutraubling (DE); Meier, Dominik, 93073 Neutraubling (DE); Gerstenberg, Thomas, 93073 Neutraubling (DE); Senn, Konrad, 93073 Neutraubling (DE); Vogler, Daniel, 93073 Neutraubling (DE); Hoellriegl, Thomas, 93073 Neutraubling (DE); Voth, Klaus, 93073 Neutraubling (DE); Betz, Christian, 93073 Neutraubling (DE)
(74) Vertreter: Hannke Bittner & Partner mbB Regensburg

(56) Entgegenhaltungen:
- EP-A1- 2 722 153
- EP-A2- 1 974 892
- EP-A2- 2 298 534
- DE-U1- 202004 021 477
- US-A1- 2008 191 394
- US-B2- 10 112 337

## Beschreibung

Die vorliegende Erfindung bezieht sich auf eine Vorrichtung und ein Verfahren zum Umformen von Kunststoffvorformlingen zu Kunststoffbehältnissen. Die Umformungseinrichtung und insbesondere Blasformmaschine oder Streck-Blasformmaschine weist dabei mehrere Blasstationen mit Blasformen auf, welche einen Hohlraum ausbilden, welcher der Negativform des herzustellenden Kunststoffbehältnisses entspricht. Die Kunststoffvorformlinge werden dabei üblicherweise innerhalb der Blasformen mit einer Reckstange in Längsrichtung gestreckt und anschließend durch Beaufschlagung mit einem fließfähigen Medium zu den Kunststoffbehältnissen umgeformt. Die Beaufschlagung mit dem fließfähigen Medium erfolgt dabei in mehreren verschiedenen Druckstufen mit unterschiedlichen Druckniveaus.

Gattungsgemäße Vorrichtungen und Verfahren sind in den Patentschriften EP2298534A2, DE202004-021477U1, US10112337B2, EP2722153A1, US2008/191394A1 und EP1974892A2 beschrieben.

Aus dem internen Stand der Technik der Anmelderin ist es bekannt, Druckluft beim Streckblasen zu recyceln. Wenn das Recycling ideal eingestellt ist, speist das Recycling eines vorhergehenden Kunststoffbehältnisses einer höheren Druckstufe, den Blasluftverbrauch des aktuellen Kunststoffbehältnisses in der nächst niedrigeren Druckstufe. Frischluft, d.h. neue Druckluft, wird bei einem solch idealen Prozess nur in der höchsten Druckstufe zugeführt, durchläuft dann stufenweise die Druckstufen, in verschiedenen Behältnissen und wird dann bei dem letzten Behältnis entlüftet.

Der Hochdruckluftbedarf je Behältnis ergibt sich somit bei einem gut eingestellten Recycling durch die Entlastungsmenge. Diese ergibt sich wiederum durch das Behältnisvolumen, das Totraumvolumen des Ventilblocks und den Entlastungsdruck. Das Behältnisvolumen ist gegeben und nicht veränderbar, so dass eine Reduzierung des Totraumvolumens und des Entlastungsdrucks vorgenommen werden muss. Das Totraumvolumen kann dabei beispielsweise durch geeignete Anordnung der Ventile und kleine Strömungskanäle reduziert werden und der Entlastungsdruck durch passende Prozesseinstellung.

Eine Verringerung des Entlastungsdrucks ist jedoch nicht auf beliebige Weise möglich. Zum einen muss der Entlastungsdruck höher als der erste Druck P1 sein, da sich ansonsten die Luft nicht ohne eine zusätzliche Verdichtungseinheit recyceln lässt. Der benötigte Druck P1 hängt dabei neben dem Behältnis und dessen gewünschter Materialverteilung auch von Geometrien und Durchflusswerten des Ventilblocks ab und lässt sich nicht ohne weiteres senken. Typische bekannte Drücke P1 liegen dabei zwischen 6,5 und 11,5 bar, somit liegen die Entlastungsdrücke zwischen 7 und 12 bar. Zum anderen kann die Luftmenge, wenn der Vorblasdruck P1 zu klein ist, aus den vorhergehenden Recyclingstufen nicht sauber genutzt werden, so dass bei zu großer Differenz zwischen dem Druck P1 und dem Druck P2 nur mit einer Zwischenstufe nicht ideal recycelt werden kann und Luft aus dem Zwischenkreis abgelassen werden muss oder der Entlastungsdruck liegt deutlich über dem Druck P1.

Um dem Problem der zu großen Differenz zwischen P1 und P2 für eine Zwischenstufe entgegenzutreten kann eine weitere Zwischen- bzw. Recyclingstufe eingeführt werden. Das Hinzufügen einer weiteren Druckstufe ist vorteilhaft für den Verbrauch bezüglich der Möglichkeit des besseren Recyclings, hat aber auch Nachteile.

Durch das Hinzufügen einer weiteren Zwischenstufe ist ein größerer Bauraum notwendig, wodurch ein größerer Totraum entsteht, da ein weiteres Ventil mit dem Behältnis in Verbindung gebracht werden muss. Darüber hinaus erhöht sich der Steuerluftverbrauch da ein weiteres pneumatisch vorgesteuertes Ventil zweimal geöffnet und geschlossen werden muss (beim Blasen und beim Recyceln), sowie die Druckanstiegszeit, da mehrere Stufen hintereinander schalten müssen und jeder Schaltvorgang Zeit kostet und die Druckdifferenz vor und hinter dem Ventil bei mehreren kleineren Abstufungen kleiner ist als bei wenigen großen. Dies kann zu einer schlechten Ausprägungsgüte oder hohem Fertigblasluftdruckbedarf führen.

Die Umformungseinrichtung bzw. der Ventilblock umfasst darüber hinaus eine verstellbare Vorblas(Drossel), wobei mittels Variation des Vorblasdruckes der Volumenstrom eingestellt wird. Wie aus dem internen Stand der Technik der Anmelderin bekannt ist, handelt es sich bei der Drossel derzeit um eine 4-stufige, verstellbare Vorblasdrossel, welche händisch verstellt wird. Zwischen der Drossel und dem Ventil gibt es ein ungedrosseltes Luftvolumen, welches den Totraum vorfüllt.

Es ist demnach derzeit erforderlich jede Blasstation an der Maschine händisch zu verstellen, was jedoch eine Fehlerquelle darstellt. Zudem muss die Maschine gestoppt werden. Weiterhin ist bei den bekannten Anordnungen, das Volumen zwischen Drossel und Ventil vorgegeben, so dass, wenn der Volumenstrom erhöht wird auch das Druckniveau angehoben werden muss, was jedoch zu einem erhöhten Energieverbrauch führt.

Der vorliegenden Erfindung liegt daher die Aufgabe zugrunde eine Vorrichtung und ein Verfahren bereitzustellen, welche/welches eine schnellere Blasformung bei geringeren Energie- und insbesondere Luftverbrauch ermöglicht. Insbesondere soll dabei ein minimaler Druckluftbedarf über verschiedene Behältnisgrößen erreicht werden ohne Abstriche in der Flaschenqualität oder Ausprägungsgüte zu machen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Umformen von Kunststoffvorformlingen zu Kunststoffbehältnissen gerichtet, mit einer Umformungseinrichtung, welche eine Vielzahl von Umformungsstationen aufweist, welche jeweils eine Blasform aufweisen, innerhalb denen die Kunststoffvorformlinge zu den Kunststoffbehältnissen umformbar sind, wobei die Umformungsstationen jeweils eine Reckstange zum Strecken des Kunststoffvorformlings in dessen Längsrichtung und eine Beaufschlagungseinrichtung, zur Beaufschlagung des Kunststoffbehältnisses mit einem fließfähigen Medium und insbesondere Druckluft aufweisen. Bevorzugt umfasst die Beaufschlagungseinrichtung dabei einen Blaskolben und eine Blasdüse.

Weiterhin weist die Umformungseinrichtung wenigstens vier Druckreservoirs für das fließfähige Medium auf, welche jeweils vorgegebene Drücke P1, Pi, P+, P2 aufweisen, wobei ein Druck Pi kleiner ist als ein Druck P+ und der Druck P+ kleiner ist als ein Druck P2, und einen Ventilblock mit mindestens fünf Prozessventilen V1, Vi, V+, V2, V_{Ex,} wobei die Beaufschlagungseinrichtung dazu geeignet und bestimmt ist eine Fluidverbindung zwischen dem Ventilblock und einem Mündungsbereich des Kunststoffvorformlings herzustellen, um die Kunststoffvorformlinge mit dem unter Druck stehenden fließfähigen Medium zu beaufschlagen. Die Prozessventile sind dabei dazu geeignet und bestimmt den Kunststoffvorformling mit unterschiedlichen Drücken zu beaufschlagen, wobei wenigstens ein Prozessventil dazu geeignet und bestimmt ist eine Verbindung zwischen dem Kunststoffbehältnis und einer Umgebung herzustellen.

Bevorzugt beaufschlagen die Prozessventile die Kunststoffvorformlinge unabhängig voneinander mit dem fließfähigen Medium, wobei die Ventile besonders bevorzugt parallel zueinander angeordnet sind. Die Herstellung der Verbindung zwischen Kunststoffbehältnis und Umgebung durch ein Prozessventil und insbesondere das Prozessventil V_{Ex,} entspricht dabei bevorzugt der Entlastung des Kunststoffbehältnisses, bevorzugt in der letzten Recyclingstufe. Werden die Kunststoffvorformlinge mit beispielsweise vier Drücken beaufschlagt, folgen bevorzugt auch vier Recycling- bzw. Entlastungsstufen, wobei die entlastete bzw. recycelte Druckluft einer Recyclingstufe zur Beaufschlagung des nachfolgenden Kunststoffvorformlings in der nächstniedrigeren Druckstufe verwendet wird. Es wird dabei die Druckluft, welche nach der letzten Recyclingstufe übrig bleibt bzw. nicht für den Blasprozess eines nachfolgenden Behältnisses verwendet wird, an die Umgebung entlastet. Es ist daher bevorzugt, wenn diese Druckluftmenge möglichst gering ist.

Bei der Umformungseinrichtung handelt es sich dabei bevorzugt um eine Blasformmaschine und besonders bevorzugt eine Streck-Blasformmaschine. Entsprechend handelt es sich bei der Umformungsstation bevorzugt um eine Blasstation und besonders bevorzugt eine Streckblasstation. Die Reckstange der Umformungseinrichtung ist bevorzugt eine elektrische Reckstange oder Reckeinheit. Eine maximale Reckgeschwindigkeit der elektrischen Reckeinheit größer als 1,4 m/s bevorzugt größer 1,8 m/s besonders bevorzugt größer 2,2m/s. Bevorzugt handelt es sich bei der elektrischen Reckeinheit um einen Linearmotor und besonders bevorzugt einen elektromagnetischen Direktantrieb in vorzugsweiser tubularer Form. Denkbar wäre auch eine Führung der Reckstange über bevorzugt Führungskurven oder eine pneumatisch angetriebene Reckstange, oder eine Kombination aus pneumatisch und elektrischem Antrieb.

Bevorzugt ist stromabwärts bzw. nach den Prozessventilen ein Verbindungsraum vorgesehen. Unter dem Verbindungsraum wird dabei ein Bereich bzw. Raum zwischen dem Ventilblock und dem umzuformenden Kunststoffbehältnis verstanden bzw. ein Bereich stromabwärts bzw. nach dem Ventil, zwischen Ventil und Kunststoffbehältnis. Bevorzugt steht dabei jedes Prozessventil mit dem Verbindungsraum in Verbindung bzw. ist mit diesem verbunden. Bei dem Druck P1 handelt es sich dabei bevorzugt um einen Vorblasdruck, bei den Drücken Pi und P+ um Zwischenblasdrücke und bei dem Druck P2 um einen Fertigblasdruck. Der Druck P1 kann dabei größer, kleiner oder gleich dem Druck Pi und/oder P+ sein.

Erfindungsgemäß ist zwischen dem Druckreservoir P1 und dem Prozessventil V1 wenigstens eine verstellbare Drossel angeordnet, deren Durchflussmenge durch einen verstellbaren Drosselquerschnitt bestimmt wird, wobei ein Drosselquerschnitt derart verstellbar ist, dass er größer als 28 mm², vorzugsweisegrößer als 38 mm² und besonders bevorzugt größer als 52 mm² ist. Die Querschnittverstellung der Drossel ist dabei bevorzugt reproduzierbar. Besonders bevorzugt wird dabei ein Volumen zwischen der Drossel bzw. dem Druckreservoir und dem Ventil variiert bzw. verändert.

Bevorzugt wird die Durchflussmenge der wenigstens einen Drossel durch einen verstellbaren Drosselquerschnitt bestimmt, wobei der Drosselquerschnitt derart verstellbar ist, dass er nicht kleiner als 19,7 mm², bevorzugt nicht kleiner als 12,6 mm² und besonders bevorzugt nicht kleiner als 7,1 mm² ist.

Besonders bevorzugt ist der Drosselquerschnitt dabei bis maximal 29 mm², vorzugsweise bis maximal 38 mm² und besonders bevorzugt bis maximal 52 mm² verstellbar. Ein Einstellbereich des Drosselquerschnitts liegt demnach bevorzugt bei 19,7 mm² bis 52 mm², vorzugsweise bei 12,6 mm² bis 38 mm² und besonders bevorzugt bei 7,1 mm² bis 29 mm². Besonders bevorzugt liegt ein Einstellbereich des Drosselquerschnitts bei 7,1 mm² bis 52 mm², vorzugsweise in beliebigen Bereichen innerhalb dieses Bereichs.

Es wird demnach erfindungsgemäß vorgeschlagen eine Vorrichtung zum Umformen von Kunststoffvorformlingen und insbesondere einen Ventilblock bereitzustellen, welcher eine zusätzliche Zwischen- bzw. Recyclingstufe und eine verstellbare Drossel miteinander kombiniert. Dies führt bevorzugt zu kleinen Toträumen in dem Ventilblock, niedrigen Schaltvolumen, schnellen Schaltzeiten, guten Durchflusswerten und optimalen Prozesseinstellungen.

Vorteilhaft wird hierdurch auch eine bessere Reproduzierbarkeit der Behältnisqualität und der Schaltzeit des Prozessventils V1 ermöglicht und somit eine größere Rotationsgeschwindigkeit des Blasrads. Bei der Abbildung der Prozessluft wird durch die erfindungsgemäße Vorrichtung ein steilerer Anstieg und Fall der Druckkurve erreicht, was zu höheren Stationsleistungen führt. Weiterhin wird durch die Kombination der verstellbaren Drossel und der zusätzlichen Zwischendruckstufe ein geringerer Totraum, geringere Steuerluft Druck/Volumen ermöglicht, was zu einem geringerem Energieverbrauch führt. Auch kann ein modularer Ventilblock mit kostengünstiger Basisausführung bereitgestellt werden.

Bevorzugt wird dabei insbesondere durch die zusätzliche Zwischenstufe P+, wie insbesondere in den Figuren genauer erläutert wird, der Druckluftverbrauch reduziert. Aufgrund dieser optimierten Druckdurchflüsse sind schnelle Druckanstiegszeiten mögliche und somit schnelle Stationsleistungen, so dass die Blasdauer verringert und das Behältnis schneller geblasen wird. Die Blasdüse wird dabei bevorzugt von der Mündung des Behältnisses abgehoben bzw. von dem Behältnis entfernt, wenn noch Druck in dem Behältnis vorhanden ist. Bisher wurde diese, wie aus dem internen Stand der Technik der Anmelderin bekannt ist, erst abgehoben, wenn kein Druck mehr in dem Behältnis vorhanden war.

Besonders bevorzugt wird zudem die Haltezeit bei der Beaufschlagung mit dem Maximaldruck P2 erhöht. Dies führt insbesondere zu einer verbesserten Behältnisqualität. Insbesondere ist dabei ein schnelles Erreichen des P2 Druckniveaus vorteilhaft, so das bevorzugt die (absolute) Haltedauer zwischen dem Zeitraum des Erreichens von 90% des Drucks P2 bis zum Zeitpunkt des Öffnens des Prozessventils V_{EX} maximiert wird.

Vorteilhaft werden die Prozessventile derart angeordnet, so dass innerhalb des Ventilblocks ein minimaler Totraum ausgebildet wird. Bevorzugt sind die mindestens vier Ventile in mehr als zwei Ebenen angeordnet, so dass das Totraumvolumen kleiner ist als 150 ml, bevorzugt kleiner als 100 ml und besonders bevorzugt kleiner als 80 ml. Durch einen kleinen Totraum kann der Luftverbrauch weiter reduziert werden. Unter dem Totraum des Ventilblocks wird dabei bevorzugt der gesamte Raum zwischen dem Mundstück des Behältnisses und den Ventilsitzen und Druckaufnehmer verstanden, der sich mit Luft füllen lässt. Bei dem Prozessventil, welches den Verbindungsraum mit einer Umgebung in Verbindung bringt, handelt es sich bevorzugt um ein unabhängiges Prozessventil.

Die Umformungseinrichtung weist bevorzugt ein Druckkissen auf, wobei die Anschlüsse und/oder Leitungen und/oder das Totvolumen zu dem Druckkissen in Summe bevorzugt kleiner als 120 ml, bevorzugt kleiner als 80 ml und besonders bevorzugt kleiner als 60 ml sin, um den Druckluftverbrauch weiter zu reduzieren. Wenn es die Ausgestaltung der Umformungseinrichtung bzw. der Blasform zulässt, d.h. eine geeignete Formträgerkonstruktion aufweist, kann das Druckkissen bevorzugt auch weggelassen werden. Bevorzugt ist demnach auch eine druckkissenlose Umformungseinrichtung denkbar, was ebenfalls den Druckluftverbrauch verringert.

Bevorzugt ist auch ein Totraum in der BKIR (Bodenkühlung in Reihe) Reckstange und dem zugehörigen Ventil kleiner als 50 ml, bevorzugt kleiner 30 ml und besonders bevorzugt kleiner als 15 ml. Die Bodenkühlung in Reihe kann bevorzugt auch entfallen.

Wie oben erwähnt, wird zumindest ein Teil der verwendeten Streckblasluft recycelt und zur Blasformung des folgenden Behältnisses verwendet. Dabei ist es im Hinblick auf den Luftverbrauch vorteilhaft insbesondere die in der letzten Recyclingstufen an die Umgebung entlastete Luft niedrig zu halten. Bevorzugt sind die Entlastungsdrücke kleiner als 8 bar, bevorzugt kleiner als 7 bar und besonders bevorzugt kleiner als 6 bar. Wird der Kunststoffvorformling und/oder das Kunststoffbehältnis mit vier Drücken bzw. Druckniveaus beaufschlagt, sind, wie oben bereits erwähnt, bevorzugt auch vier Recyclingstufen vorhanden.

Die Prozessventile V_{Ex} und V2 weisen bevorzugt kleine Schaltvolumen auf und werden jeweils nur einmal bei der Umformung des Kunststoffbehältnisses geschalten. Die Prozessventile P1, Pi und P+ werden dagegen bevorzugt zweimal geschalten, einmal bei der Beaufschlagung des Kunststoffbehältnisses mit dem entsprechenden Druckniveau und einmal bei der zugehörigen Recyclingstufe. Es ist demnach vorteilhaft die Prozessventile P1, Pi und P+ derart auszubilden, so dass diese wenig Steuerluftvolumen und wenig Steuerluftdruck benötigen. Bevorzugt liegt das Steuervolumen für einen gesamten Prozessablauf eines herzustellenden Kunststoffbehältnisses bei kleiner 60 ml, bevorzugt kleiner 45 ml und besonders bevorzugt kleiner 30 ml. Der Luftverbrauch ist entsprechend bevorzugt kleiner 0,6 g, bevorzugt kleiner 0,45 g und besonders bevorzugt kleiner 0,3 g. Dies kann bevorzugt durch druckkompensierte Ventile erreicht werden.

Bei einer bevorzugten Vorrichtung ist der Druck P1 variabel einstellbar und bevorzugt kleiner als 8 bar und besonders bevorzugt kleiner als 6 bar und bevorzugt größer als 3 bar und besonders bevorzugt größer als 4 bar und/oder der Druck P2 ist variabel einstellbar und bevorzugt größer als 16 bar, bevorzugt größer als 18 bar und besonders bevorzugt größer als 22 bar. Das Druckniveau dieser Druckstufen kann demnach einfach an die aktuellen Anforderungen, wie beispielsweise unterschiedliche Behältnisgrößen angepasst werden. Bei den Drücken für P1 und P2 handelt es sich dabei um konträre Anforderungen, da bei einem kleinen P1-Druck der Luftverbrauch verringert wird, jedoch bei einem großen P2-Druck eine gute Behälterqualität erreicht werden kann.

Bei einer weiteren bevorzugten Ausführungsform sind die Druckreservoirs und der Ventilblock über Leitungen und insbesondere Druckluftleitungen verbunden, deren kleinste Querschnitte größer oder gleich 110 mm², bevorzugt größer oder gleich 140 mm² und besonders bevorzugt größer oder gleich 155 mm² sind. Bevorzugt handelt es sich dabei um eine Verbindung der Beaufschlagungseinrichtung und den Druckreservoirs für die Drücke Pi und/oder P+ und/oder P2.

In einer weiteren bevorzugten Ausführungsform ist die Beaufschlagungseinrichtung beweglich in dem Ventilblock gelagert. Besonders bevorzugt ist die Beaufschlagungseinrichtung und insbesondere der Blaskolben und/oder die Blasdüse in einer Längsrichtung des Kunststoffbehältnisses bewegbar und/oder auf das Kunststoffbehältnis zu bewegbar.

Bei einer bevorzugten Ausführungsform weist eine Umformungsstation besonders bevorzugt jede Umformungsstation wenigstens einen Sensor zur Bestimmung eines Drucks auf, wobei es sich hier um einen Druck insbesondere zwischen einem Prozessventil und dem Kunststoffvorformling handelt. So ist es möglich die Druckhöhe und damit auch indirekt den Luftverbrauch zu ermitteln und/oder zu überwachen. Beispielsweise kann bevorzugt in geeigneter bzw. bekannter Weise auch eine Fehlermeldung ausgegebenen werden, wenn der Druck zu hoch und/oder zu niedrig ist.

Bei einer besonders bevorzugten Ausführungsform weist die Vorrichtung genau fünf Prozessventile (V1, Vi, V+, V2, V_{Ex}) auf, d.h., dass innerhalb des Ventilblocks und/oder an dem Ventilblock fünf Ventile angeordnet sind. Bevorzugt wird demnach zur Erreichung eines möglich kleinen Totraums und Energieeinsparung eine Kombination einer zusätzlichen (Zwischen)Druckstufe, fünf Prozessventilen und einer verstellbaren Drossel vorgeschlagen. Diese Kombination ermöglicht bei erfindungsgemäßer Ausführungsform einen geringen Druckluftverbrauch bei hoher Behältnisqualität.

Bei einer weiteren bevorzugten Ausführungsform ist ein Strömungsquerschnitt der Prozessventile Vi und V+ und/oder V2 und/oder V_{Ex} zwischen dem jeweiligen Prozessventil und der Beaufschlagungseinrichtung jeweils größer oder gleich 150 mm² und bevorzugt größer oder gleich 200 mm². Ein Strömungsquerschnitt eines Ringspalt zwischen der Innwandung des Mündungsbereichs des Kunststoffvorformlings und der Reckstange wird bei Mündungsbereichen mit kleiner 22 mm Innendurchmesser bevorzugt durch optimierte Blasdüseninnengeometrien um weniger als 50% eingeengt.

Bei einer bevorzugten Ausführungsform ist eine Hubbewegung bzw. eine Amplitude der Hubbewegung des Blaskolbens größer als 15 mm, bevorzugt größer als 12 mm und bevorzugt größer als 10 mm und kleiner als 60 mm, bevorzugt kleiner als 45 mm und bevorzugt kleiner als 30 mm.

Bei den Prozessventilen Vi und/oder V+ und/oder V2 und/oder V_{Ex} handelt es sich bevorzugt um pneumatisch vorgesteuerte Sitzventile, deren Sitz eine Querschnittsfläche größer 150 mm² und bevorzugt größer 200 mm² ist. Bevorzugt sind die Prozessventile Vi und/oder V+ und/oder V2 und/oder V_{Ex} pneumatisch vorgesteuerte Sitzventile, deren Arbeitshub kleiner als 6 mm ist. Der Hub ist dabei ausschlaggeben für die Lebensdauer und den Steuerluftverbrauch des Ventils. Ein kleiner Hub führt entsprechend zu einer längeren Lebensdauer und geringerem Luftverbrauch.

Bei einer weiteren bevorzugten Ausführungsform handelt es sich bei den Prozessventilen Vi und/oder V+ und/oder V2 und/oder V_{Ex} um pneumatisch vorgesteuerte wenigstens teilkompensierte Sitzventile. Bevorzugt sind die Prozessventile Vi und/oder V+ und/oder V2 und/oder V_{Ex} pneumatisch vorgesteuerte Sitzventile, welche von Steuerungseinrichtungen, wie vorzugsweise elektrischen Piloten angesteuert werden, welche programmgesteuert schalten.

Eine Grundform des erwähnten Verbindungsraums und insbesondere einer Verbindungsraumaußenwand ist ein Kreis größer 40 mm und kleiner 80 mm. Verbindungsbohrungen von Ventilen durchdringen dabei bevorzugt die Grundform der Verbindungsraumaußenwand nahezu auf einer Höhe.

Bei einer bevorzugten Ausführungsform ist die wenigstens eine Drossel zwischen mindestens zwei, bevorzugt mindestens vier und besonders bevorzugt mindestens fünf festen Stellungen verstellbar, wobei die Verstellung bevorzugt durch einen drehbaren Zylinder mit unterschiedlichen Durchlassbohrungen erzeugbar ist.

Vorteilhaft ist die wenigstens eine Drossel durch eine Abstandsänderung zweier Blendenteile, die über eine Bewegung aufeinander zugestellt werden variabel einstellbar oder durch einen Tausch von Einlegeteilen.

Bei einer weiteren bevorzugten Ausführungsform ist die wenigstens eine Drossel händisch, motorisch oder werkzeuglos verstellbar. Besonders bevorzugt ist durch die Verstellung der wenigstens einen Drossel ein Volumen zwischen der Drossel bzw. dem Druckreservoir und dem Prozessventil variierbar. Insbesondere erfolgt die Verstellung de Drossel dabei durch lineare oder rotative Bewegung.

Der Motor zur motorischen Verstellung ist dabei bevorzugt aus einer Gruppe von Motoren oder Antrieben ausgewählt, welche einen Schrittmotor, einen Servomotor, einen pneumatischen Antrieb, einen elektromagnetischen Antrieb oder einen piezoelektrischen Antrieb aufweist.

Denkbar wäre bevorzugt allerdings auch, dass die Verstellung der Drossel aus Kombinationen der oben genannten Möglichkeiten erfolgen kann, beispielsweise einer mechanischen Grob-Einstellung und einer piezoelektrischen Verstellung feiner Abstufungen.

Eine Verstellung der Drossel mit einem Schrittmotor ist dabei bevorzugt. Bevorzugt enthält der Ventilblock wenigstens zwei Drosselstellungen, welche mittels einer Koppelstange verbunden sind. Zwischen diesen Drosselstellungen entsteht dabei ein weiteres Volumen, wobei es zur Verstellung bzw. Veränderung der Drosselstellung möglich wäre, eine Boostereinstellung für kleine Flaschen bereitzustellen und eine Einstellung für große Flaschen.

Besonders bevorzugt weist die Vorrichtung und insbesondere der Ventilblock zwei Drosseln auf, welche miteinander über eine Koppelstange verbunden sind. Die Drosseln können bevorzugt wahlweise bzw. in Abhängigkeit der aktuellen Anforderungen verstellt werden. Besonders bevorzugt erfolgt die Verstellung der Drosseln über einen Schrittmotor, wobei jeder Schritt des Schrittmotors eine Position der Drossel beschreibt. Beim Maschinenstart wird bevorzugt eine Referenzfahrt der Drosseln vorgenommen, wobei die Drosseln bevorzugt bis zu ihrem Anschlag verfahren werden. Anschließend ist es erforderlich dieselbe Anzahl an Schritte aufzumachen, wodurch die Startposition gefunden wird. Danach ist es nur noch erforderlich eine Vorblaskurve zu vereinheitlichen.

Die Vereinheitlichung der Vorblaskurve kann bevorzugt durch eine Hinterlegung einer Tabelle vermieden werden, so dass die Verstellung der Drosseln über eine indirekte Steuerung vorgenommen wird, beispielsweise werden Querschnitten der Drosseln, beispielsweise 1,1 mm, 1,2 mm ... 8,5 mm, Schritte zugewiesen, so dass beispielsweise ein Querschnitt von 5,4 mm 2350 Schritten entspricht.

Eine derartige Vorgehensweise ist vorteilhaft, da hierdurch eine stufenlose Einstellung des Volumenstroms bei P1 ermöglicht wird ohne, dass hierzu der Druck erhöht werden muss. Dies führt zu einer deutlichen Energieeinsparung der Maschine. Zusätzlich kann auf unterschiedliche Behältnisgrößen besser reagiert werden und insbesondere die Materialverteilung während des Vorblasens verbessert werden. Zusätzlich können auch alle Blasstationen angeglichen werden, so dass eine nahezu identische Vorblaskurve erhalten wird.

Die Vorrichtung kann weiterhin auch eine Messeinrichtung zur Messung des Luftverbrauchs der Gesamtmaschine aufweisen. Der Verbrauch bzw. das Ergebnis dieser Messung kann dabei bevorzugt an einem HMI (Human Machine Interface) angezeigt werden, in einer Cloud gespeichert werden und/oder an ein handheld device weitergegeben werden. Bevorzugt kann eine Luftqualität über beispielsweise die Partikeldichte und Größe oder einen Drucktaupunkts in der Luftzuführung gemessen werden.

Besteht der Kunststoffvorformling aus recyceltem PET kann dieser bevorzugt durch eine einstellbare Reckgeschwindigkeit kleiner 1,4 m/s verarbeitet werden. Bevorzugt ist auch eine erweiterte Blaskurvenüberwachung denkbar.

Der Ventilblock ist eine wichtige Einrichtung der Umformungseinrichtung. Insbesondere dient der Ventilblock zur Führung der Beaufschlagungseinrichtung bzw. Blasdüse und setzt das Innere des Kunststoffvorformling bzw. des Kunststoffbehältnisses in Strömungsverbindung mit den einzelnen, in der Umformungseinrichtung vorherrschenden Druckniveaus. Zu diesem Zweck weist der Ventilblock wenigstens fünf Ventile auf, wobei bevorzugt drei der fünf Ventile die verschiedenen Druckniveaus während des Druckaufbaus in der Flasche steuern. Ein Ventil ist bevorzugt für das Entlasten des Behälterinnendrucks zuständig, das sogenannte Exhaust-Ventil (V_{EX}). Durch dieses Ventil und den bevorzugt nachgelagerten Schalldämpfer wird der Innendruck aus dem Behältnis der Umgebung zugeführt.

Bei aus dem Stand der Technik der Anmelderin bekannten Ventilblöcken ist das Exhaust-Ventil auf der Seite des Ventilblocks angeordnet und der Schalldämpfer auf der, dem Lagerbock des Reckmoduls zugewandten Seite. Die Achsrichtungen des Ventils und des Schalldämpfers unterscheiden sich demnach und stehen bei der aus dem internen Stand der Technik der Anmelderin bekannten Ausführungsform im 90°-Winkel zueinander.

Diese Anordnung ist jedoch insbesondere für die Strömungsführung im Ventilblock nachteilig. Das Druckentlasten der Behältnisse soll sehr schnell vorgenommen werden, so dass die Strömungsführung möglichst direkt sein sollte. Bei dem aus dem Stand der Technik der Anmelderin bekannten Ventilblock muss die Strömung jedoch mindestens einmal umgelenkt werden, woraus sich erhebliche Strömungswiderstände ergeben. Ein weiterer Nachteil ist der Bauraumverbrauch. Der Ventilblock vereinigt mehrere Funktionen, weshalb auch diverse weitere Teile/Baugruppen am Ventilblock befestigt sind. Bei dem aus dem Stand der Technik der Anmelderin bekannten Aufbau verbrauchen sowohl das Exhaust-Ventil als auch der Schalldämpfer Bauraum an der Außenhülle des Ventilblocks.

Bevorzugt ist demnach in einer besonders bevorzugten Ausführungsform das Exhaust Ventil bzw. Prozessventil V_{Ex} koaxial zu einem Schalldämpfer des Ventilblocks angeordnet. Der Schalldämpfer ist dabei bevorzugt auf dem Ventil angeordnet bzw. aufgesattelt. Der Ventilkolben kann in einer möglichen Variante als Hohlkolben ausgeführt sein.

Zwischen dem Ventil und dem Schalldämpfer ist bevorzugt eine Dichtungseinrichtung angeordnet. Die Dichtstelle kann dabei bevorzugt flachdichtend ausgeführt sein, wobei geeignete Werkstoffe für die Dichtpartner gewählt werden. Denkbar wäre bevorzugt auch eine Weichdichtung. Der oben erwähnte Hohlkolben kann bevorzugt so ausgeführt sein, dass dieser aktiv über Steuerluft geschlossen gehalten wird. Bei einer Entlastung des Steuerdrucks wird der Blaskolben bevorzugt in eine Offenstellung verfahren. Diese Bewegung wird bevorzugt durch eine gezielte Gestaltung der Dichtkante vom Druck im Arbeitsraum unterstützt. Das Arbeitsmedium strömt dann bevorzugt durch nierenförmige Auslassöffnungen des Ventils und den Hohlkolben in den Schalldämpfer und wird über diesen der Umgebung zugeführt.

Bei einer weiteren Ausführungsform ist das Ventil bevorzugt koaxial zum Schalldämpfer angeordnet und zusätzlich ist das Exhaust-Ventil druckkompensiert. Der Ventilkolben dichtet dann bevorzugt direkt am Ventilblockgehäuse ab, wodurch ein minimaler Totraum entsteht. Durch eine zentrale Bohrung des Ventilkolbens wird die Druckkompensation erreicht. Bei vollständig kompensiertem Ventil wird der Ventilkolben bevorzugt aktiv geschlossen gehalten und aktiv geöffnet. Ist das Ventil lediglich teilkompensiert, kann bevorzugt auf eine aktive Öffnung des Kolbens verzichtet werden, da dieser über den Arbeitsdruck bei Entlastung geöffnet wird. Ist das Ventil geöffnet, strömt das Arbeitsmedium an der Kolbeneinheit vorbei in Richtung des Schalldämpfers und wird der Umgebung zugeführt.

In einer anderen Ausführungsform ist der Ventilkolben teilkompensiert und wird entsprechend vom Arbeitsmedium geöffnet und mit Steuerdruck aktiv geschlossen. Der Ventilkolben ist bevorzugt innenzentriert und der Schalldämpfer und das Ventil sind wieder koaxial angeordnet.

Bevorzugt kann der Schalldämpfer, statt koaxial, auch in einem Winkel zu dem Ventil angeordnet sein, wobei der Winkel zwischen Ventilachse und Schalldämpferachse bevorzugt weniger als 50° beträgt.

Die oben beschriebenen Anordnungen des Schalldämpfers in Bezug auf das Prozessventil V_{Ex} ermöglichen vorteilhaft eine verbesserte Strömungsführung sowie eine höhere Entlüftungsleistung. Weiterhin wird durch die vorteilhafte Anordnung des Schalldämpfers das Prozesszeitfenster durch Verkürzung der Entlüftungszeit vergrößert. Auch kann der durch die veränderte Anordnung freiwerdende Bauraum an der Außenseite des Ventilblocks für andere Anbauteile genutzt werden.

Die vorliegende Erfindung ist weiter auch auf ein Verfahren zum Umformen von Kunststoffvorformlingen zu Kunststoffbehältnissen gerichtet, mit einer Umformungseinrichtung, welche eine Vielzahl von Umformungsstationen aufweist, innerhalb denen die Kunststoffvorformlinge zu den Kunststoffbehältnissen umgeformt werden, wobei die Kunststoffvorformlinge mittels einer Reckstange in der Längsrichtung gestreckt werden und mittels einer Beaufschlagungseinrichtung mit einem fließfähigen Medium und insbesondere Druckluft beaufschlagt werden, und wenigstens vier Druckreservoirs vorgesehen sind, welche vorgegebene Drücke (P1, Pi, P+ und P2) aufweisen, wobei ein Druck Pi kleiner ist als ein Druck P+ und der Druck P+ kleiner ist als ein Druck P2 und ein Ventilblock mit mindestens fünf Prozessventilen (V1, Vi, V+, V2, V_{Ex}) vorgesehen ist, wobei die Beaufschlagungseinrichtung eine Fluidverbindung zwischen dem Ventilblock und einem Mündungsbereich des Kunststoffvorformlings herstellt, um die Kunststoffvorformlinge mit dem unter Druck stehenden fließfähigen Medium zu beaufschlagen und die Prozessventile die Kunststoffvorformlinge mit unterschiedlichen Drücken beaufschlagen.

Erfindungsgemäß werden die Drücke und Schaltzeiten der Prozessventile so gewählt, dass eine Luftmasse die je Kunststoffbehältnis nach einer Recyclingstufe in die Umgebung entlüftet wird mit der Formel m=x*V beschrieben werden kann, wobei V das Behältervolumen in Liter, m die Luftmasse in Gramm und x einen Faktor des Behältervolumens in Abhängigkeit der Luftmasse beschreibt, wobei 7 ≤ x ≤ 15, bevorzugt 8 ≤ x ≤ 13 und besonders bevorzugt 8.5 ≤ x ≤ 12 gilt.

Der Faktor x beschreibt dabei insbesondere die Steigung einer Kurve, insbesondere einer Abbildung des Druckverlaufs in einem Diagramm. Entsprechend handelt es sich bei dem Bereich 7 ≤ x ≤ 15 bzw. 8 ≤ x ≤ 13 bzw. 8.5 ≤ x ≤ 12 jeweils um eine, bevorzugt mit der obigen Formel beschriebene, Kurvenschar.

Bei der Recyclingstufe, welche einen Druck bzw. eine Luftmasse des Kunststoffbehältnisses an die Umgebung entlüftet handelt es sich bevorzugt um die letzte Recyclingstufe. Bei den im Rahmen der anderen Recyclingstufen vorgenommenen Entlüftungen wird, wie oben bereits erwähnt, die entlastete Druckluft zur Beaufschlagung eines nachfolgenden Kunststoffvorformlings in der nächstniedrigeren Druckstufe verwendet.

Bei einem bevorzugten Verfahren wird der Druck P1 variabel eingestellt und bevorzugt kleiner als 8 bar und besonders bevorzugt kleiner als 6 bar ist und bevorzugt größer als 3 bar und besonders bevorzugt größer als 4 bar ist und/oder der Druck P2 variabel eingestellt wird und bevorzugt größer als 16 bar, bevorzugt größer als 18 bar und besonders bevorzugt größer als 28 bar ist.

Bei einem bevorzugten Verfahren wird die Beaufschlagungseinrichtung angehoben bevor der Druck in dem Ventilblock einen Überdruck von 0,1 bar, bevorzugt 0,2 bar und besonders bevorzugt 0,5 bar unterschreitet. Unter einem Anheben der Beaufschlagungseinrichtung wird dabei verstanden, dass die Beaufschlagungseinrichtung, bevorzugt nach dem Blasvorgang, von dem Kunststoffbehältnis wegbewegt wird.

Bei einem weiteren bevorzugten Verfahren werden Schaltzeiten der Prozessventile so gewählt, dass eine Druckanstiegszeit t90 vom Moment eines Schaltens von Pi bis zum Erreichen von 90% von P2 bei höher 180 ms, bevorzugt höher als 160 ms und besonders bevorzugt höher als 140 ms liegt. Die Druckabstiegszeit vom Schalten einer erster Recyclingstufe bis zum Schalten des Prozessventils V_{Ex} beträgt mehr als 140 ms und bevorzugt mehr als 180 ms. Dabei gilt bevorzugt P1 =y*P1_{base}, wobei gilt 2 < y < 5, vorzugsweise 2,5 < y < 4 und P1 direkt proportional zu P1_{base} ist bzw. P1 von P1_{base} abhängig ist. P1_{base} ist dabei der niedrigste Druck nach der ersten Drucküberhöhung bei P1, was in den Figuren näher beschrieben wird.

Der schnelle Druckanstieg lässt sich bevorzugt durch durchflussoptimierte Druckluftführung als auch durch schnelle Schaltzeiten erreichen und/oder durch optimierte Strömungsquerschnitte im Druckluftschlauch in den Schlauchverbindern, im Blasblock, im Schaltventil, im Blaszylinder und im Blaskolben. Dabei können gemäß ISO 6358 sehr gute Leitwerte (C-Werte) in beiden Strömungsrichtungen erreicht werden. Bei den Drücken Pi und P+ bzw. den Prozessventilen Vi und V+ sind die C-Werte vom Druckverteiler bis in die Blasdüse größer 700 l/(min*bar), bevorzugt größer 800 l/(min*bar) und besonders bevorzugt größer 900 l/(min*bar).

Für einen schnellen Prozess ist zudem auch die Entlastungszeit entscheidend, so dass der Durchfluss durch den Mündungsbereich des Behältnisses, den Blasblock und den Schalldämpfer ebenfalls sehr wichtig sind. Bevorzugt sind hier optimierte Strömungsauslegung bei den C-Werten von über 1200 l/(min*bar), bevorzugt über 1500 l/(min*bar) und besonders bevorzugt über 1700 l/(min*bar).

Mit der erfindungsgemäß beschriebenen Umformungsstation sind qualitativ hochwertige Behälter für Behälter mit einem Volumen zwischen 1- 2,5 Liter auch bei hohen Stationsleistungen größer 2250 Beh/h (Behälter/Stunde), bevorzugt größer 2500 Beh/h und besonders bevorzugt größer gleich 2700 Beh/h herstellbar. Bei Behältnissen mit einem Volumen kleiner 1l sind Stationsleistungen größer 2500 Beh/h, bevorzugt größer 2650 Beh/h und besonders bevorzugt 2800 Beh/h herstellbar.

Weiterhin sind mit der erfindungsgemäß beschriebenen Umformungsstation qualitativ hochwertige Behälter für CSD Anwendungen mit pneumatischer Innenkühlung für Behälter zwischen kleiner 1l auch bei hoher Stationsleistung größer 2500 Beh/h, bevorzugt größer 2600 Beh/h und besonders bevorzugt 2700 Beh/h herstellbar.

Die oben beschriebene Vorrichtung ist dabei insbesondere auch dazu eingerichtet und dafür vorgesehen, dieses beschriebene Verfahren durchzuführen, d. h., dass alle für die obig beschriebene Vorrichtung ausgeführten Merkmale ebenso für das hier beschriebene Verfahren offenbart sind und umgekehrt.

Weitere Vorteile und Ausführungsformen ergeben sich aus den beigefügten Zeichnungen. Darin zeigt:
- Fig. 1: zeigt ein Diagramm mit dem Verlauf einer Druckluftkurve gemäß dem Stand der Technik;
- Fig. 2: zeigt ein Diagramm mit dem Verlauf einer Druckluftkurve gemäß der erfindungsgemäßen Vorrichtung / dem erfindungsgemäßen Verfahren;
- Fig. 3: zeigt ein Diagramm mit den Verläufen der Druckkurve gemäß dem Stand der Technik und gemäß der erfindungsgemäßen Vorrichtung / dem erfindungsgemäßen Verfahren im Vergleich;
- Fig. 4a und 4b: zeigen eine schematische Darstellung eines Ventilblocks gemäß dem Stand der Technik;
- Fig. 5: zeigt eine schematische Darstellung eines erfindungsgemäßen Ventilblocks;
- Fig. 6: zeigt eine schematische Darstellung einer Anordnung eines Schalldämpfers und eines Prozessventils gemäß dem Stand der Technik;
- Fig. 7: zeigt eine schematische Darstellung einer ersten erfindungsgemäßen Ausführungsform einer Anordnung eines Schalldämpfers und eines Prozessventils;
- Fig. 7a: zeigt eine Detaildarstellung der in Figur 7 gezeigten Abdichtung;
- Fig. 7b: zeigt eine weitere schematische Darstellung der ersten erfindungsgemäßen Ausführungsform;
- Fig. 7c: zeigt eine weitere schematische Darstellung der ersten erfindungsgemäßen Ausführungsform;
- Fig. 8a: zeigt eine schematische Darstellung einer zweiten erfindungsgemäßen Ausführungsform einer Anordnung eines Schalldämpfers und eines Prozessventils;
- Fig. 8b: zeigt eine weitere schematische Darstellung der zweiten erfindungsgemäßen Ausführungsform;
- Fig. 9: zeigt eine schematische Darstellung einer dritten erfindungsgemäßen Ausführungsform einer Anordnung eines Schalldämpfers und eines Prozessventils;
- Fig. 10: zeigt eine schematische Darstellung einer erfindungsgemäßen Ausführungsform einer Anordnung von verstellbaren Drosseln; und
- Fig. 11: zeigt eine schematische Darstellung einer weiteren erfindungsgemäßen Ausführungsform einer Anordnung von verstellbaren Drosseln.

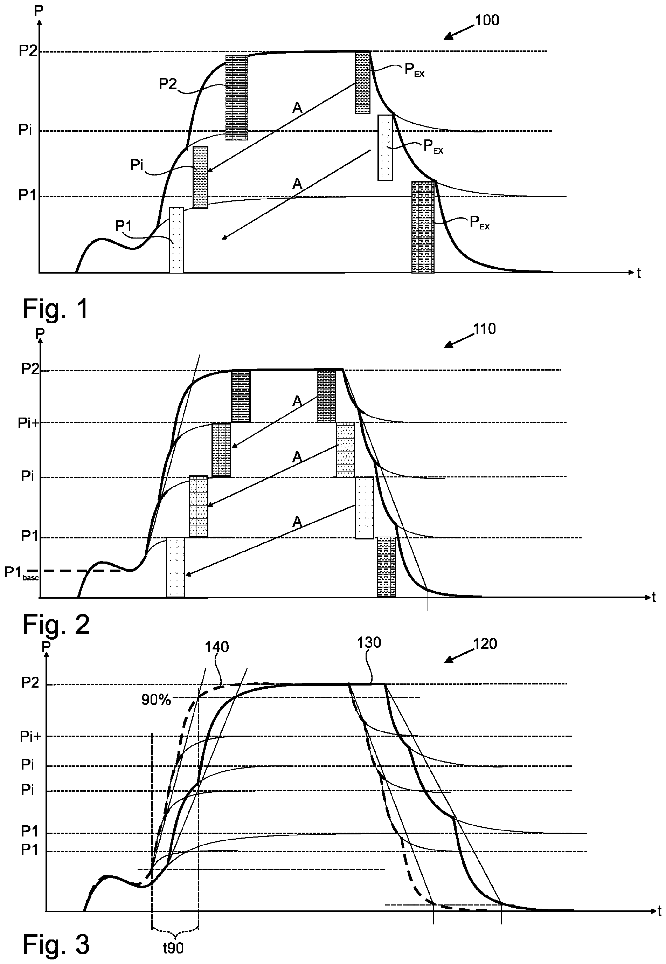

Figur 1 zeigt ein Diagramm 100 mit dem Verlauf einer Druckluftkurve gemäß dem Stand der Technik. Das Diagramm 100 zeigt dabei den Druckverlauf P in Abhängigkeit von der Zeit t.

Die auf der linken Seite der Figur vorhandenen drei Säulen, welche mit P1, Pi und P2 gekennzeichnet sind, stellen die Beaufschlagung des Kunststoffbehältnisses mit den Drücken P1, Pi und P2 da. Die rechten drei Säulen zeigen die Entlastungsphasen, in denen ein Entlastungsdruck P_{Ex} aus den Kunststoffbehältnissen abgelassen wird.

Die Pfeile A verdeutlichen dabei, dass der in der ersten (oberen) Entlastungsphase abgelassene Druck zur Beaufschlagung eines nachfolgenden Kunststoffbehältnisses in der nächstniedrigen Druckstufe Pi dient und der in der zweiten (mittleren) Entlastungsphase abgelassene Druck entsprechend zur Beaufschlagung des nachfolgenden Kunststoffbehältnisses in der Druckstufe P1 dient. Demnach wird bevorzugt mit dem Entlastungsdruck eines vorhergehenden Behältnisses einer höheren Druckstufe, der Blasluftverbrauch des nachfolgenden Behältnisses in der nächstniedrigeren Druckstufe gespeist. Neue Druckluft wird dabei (idealisiert) nur bei der Beaufschlagung mit dem Druck P2 zugeführt. Diese Druckluft durchläuft dann stufenweise die Druckstufen, in verschiedenen Behältnissen und wird dann bei dem letzten Behältnis entlüftet (untere Entlastungsphase).

Die dritte (untere) Entlastungsphase soll dabei im Hinblick auf den Druck- und Energieverbrauch möglichst klein sein, muss allerdings auch höher als der Druck P1 sein, da es ansonsten nicht möglich wäre die Luft ohne eine zusätzliche Verdichtungseinheit zu recyceln.

Figur 2 zeigt ein Diagramm 110 mit dem Verlauf einer Druckluftkurve gemäß der erfindungsgemäßen Vorrichtung / dem erfindungsgemäßen Verfahren. Anders als in dem Diagramm der Figur 1 ist hier eine weitere zusätzliche Zwischenstufe vorhanden, in der das Behältnis zusätzlich mit dem Druck P+ beaufschlagt wird.

Zu erkennen ist auch wieder, dass die Entlastungsdrücke P_{Ex} zur Beaufschlagung einer nächstniedrigeren Druckstufe verwendet werden. Durch die zusätzliche Druckstufe P+ kann die letzte Entlastungsphase erheblich reduziert werden und somit der Druckluftverbrauch reduziert werden.

Das Bezugszeichen P1_{base} kennzeichnet den niedrigsten Druck nach der ersten Drucküberhöhung bei der Beaufschlagung mit dem Druck P1.

Figur 3 zeigt ein Diagramm 120 mit den Verläufen der Druckkurve gemäß dem Stand der Technik 130 und gemäß der erfindungsgemäßen Vorrichtung / dem erfindungsgemäßen Verfahren 140 im Vergleich. Dabei ist erkennbar, dass bei der erfindungsgemäßen Vorrichtung die Beaufschlagung früher beginnt und eher endet, so dass demnach der Umformungsprozess schneller abläuft. Gleichzeitig wird die Behälterqualität durch eine längere Haltezeit bei dem Maximaldruck des Drucks P2 verbessert.

Die Zeit t90 kennzeichnet dabei den Moment der Beaufschlagung mit dem Druck P1 bis zum Erreichen von 90% des Drucks P2. Diese Zeit soll dabei bevorzugt möglichst klein sein.

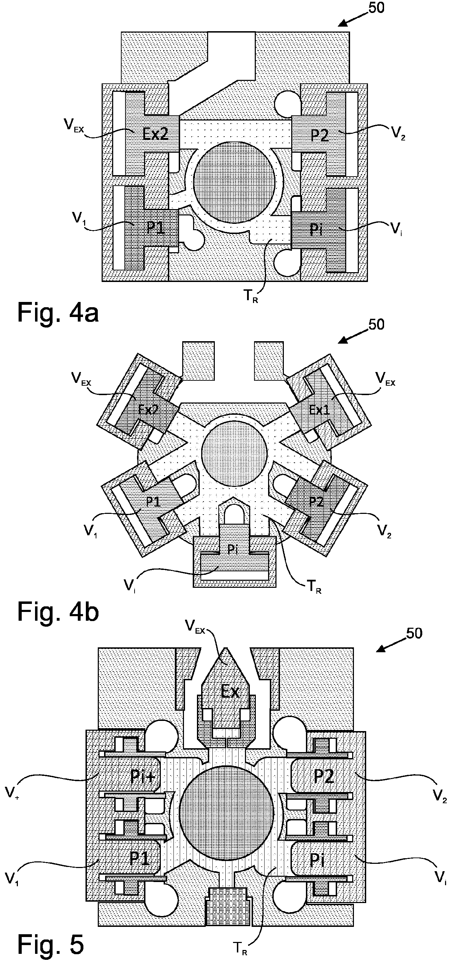

Die Figuren 4a und 4b zeigen eine schematische Darstellung eines Ventilblocks 50 gemäß dem Stand der Technik. Die Ventilblöcke 50 weisen hier vier bzw. fünf Prozessventile V1, Vi, V2, V_{Ex} auf. Aufgrund der Anordnung der Ventile der Ventile V1, Vi, V2, V_{Ex} ist der Totraum TR hier jedoch relativ groß, was zu einem hohen Bauraum und einem höheren Entlastungsdruck führt.

Figur 5 zeigt eine schematische Darstellung eines erfindungsgemäßen Ventilblocks 50. Der Ventilblock 50 weist hier ebenfalls fünf Ventile V1, Vi, V+ V2, V_{Ex,} allerdings ist hier im Vergleich zu Figur 4b eine zusätzliches Ventil V+ für eine zusätzliche Zwischenstufe vorhanden. Im Vergleich zu den Figuren 4a und 4b ist aufgrund der Anordnung der Ventile V1, Vi, V+ V2, V_{Ex} zudem der Totraum T_{R} verringert.

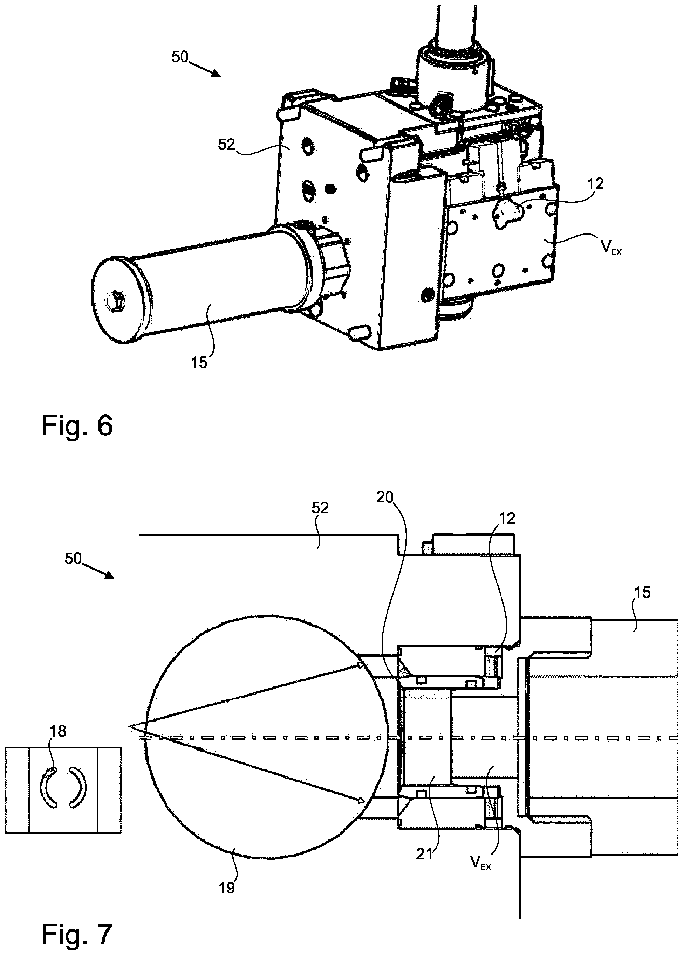

Figur 6 zeigt eine schematische Darstellung einer Anordnung eines Schalldämpfers 15 und eines Prozessventils V_{Ex} gemäß dem Stand der Technik. Das Ventils V_{Ex} ist dabei zum Entlasten des Behälterinnendrucks zuständig, wobei die entlastete Luft durch dieses Ventil und den nachgelagerten Schalldämpfer der Umgebung zugeführt wird.

Der Schalldämpfer 15 und das Ventil V_{Ex} sind dabei auf verschiedenen Seiten des Ventilgrundkörpers 52 des Ventilblocks 50 angeordnet, so dass die Achsen des Schalldämpfers 15 und des Ventils V_{Ex} im 90°-Winkel zueinanderstehen. Die Druckluft muss daher umgeleitete werden, was insbesondere zu einem hohen Strömungsweg der Luft führt. Das Bezugszeichen 12 kennzeichnet eine Steuerluftversorgung des Ventils.

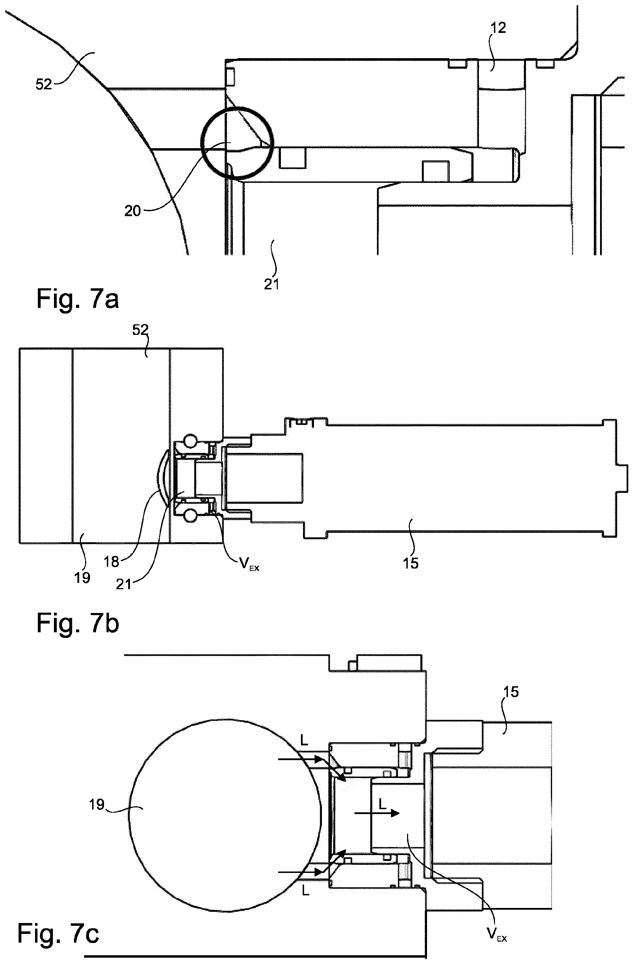

Figur 7 zeigt eine schematische Darstellung einer ersten erfindungsgemäßen Ausführungsform einer Anordnung eines Schalldämpfers 15 und eines Prozessventils V_{Ex}. Anders als im Stand der Technik sind der Schalldämpfer 15 und das Ventil V_{Ex} hier in einer Achse bzw. koaxial an dem Ventilgrundkörper 52 des Ventilblocks 50 angeordnet. Durch eine derartige Anordnung wird insbesondere der Strömungsweg der Druckluft erheblich verkürzt. Das Bezugszeichen 20 kennzeichnet einen Ventilsitz bzw. eine Dichtungseinrichtung, welche hier beispielhaft als flachdichtende Weichdichtung ausgebildet ist und das Bezugszeichen 21 einen Ventilkolben, welcher hier als Hohlkolben ausgebildet ist.

Die linke Darstellung der Figur 7 zeigt eine vergrößerte Darstellung der Auslassöffnungen 18, welche hier beispielshaft nierenförmig ausgebildet sind.

Der Ventilkolben 21 und insbesondere Hohlkolben ist in dieser Ausführungsform so ausgeführt, dass er aktiv über Steuerluft geschlossen gehalten wird und sich bei der Entlastung öffnet. Die Druckluft strömt dann durch die nierenförmigen Auslassöffnungen 18 und den Ventilkolben 21 in den Schalldämpfer 15 und wird über diesen der Umgebung zugeführt.

Der Prozessraum 19 ist in dieser Darstellung gegen den Auslass über das Ventil V_{Ex} verschlossen und ein (nicht gezeigter) Steuerluftraum für die Steuerluftversorgung ist druckbeaufschlagt, so dass das Ventil V_{Ex} aktiv zugehalten wird.

Figur 7a zeigt eine Detaildarstellung der in Figur 7 gezeigten Dichtungseinrichtung 20. Die Dichtfläche dieser Dichtungseinrichtung 20 ist dabei nach Innen versetzt, so dass das Ventil beim Entlasten des Steuerdrucks mit Unterstützung des im Prozessraum vorherrschenden Drucks geöffnet wird. Das Verhältnis der Dichtflächen ist so ausgeführt, dass das Ventil mit Steuerdruck zugehalten werden kann.

Figur 7b zeigt eine weitere schematische Darstellung der ersten erfindungsgemäßen Ausführungsform. Aus dieser Figur ist insbesondere nochmals die koaxiale Anordnung des Schalldämpfers 15 und des Ventils V_{Ex} erkennbar. Das Bezugszeichen 18 kennzeichnet dabei wiederum die nierenförmige Auslassöffnung.

Figur 7c zeigt eine weitere schematische Darstellung der ersten erfindungsgemäßen Ausführungsform. In dieser Figur sind dabei insbesondere der durch Pfeile gekennzeichnete Strömungsweg des Luftstroms L von dem Ventil V_{Ex} bis in den Schalldämpfer 15 bei geöffneten Ventil V_{Ex} erkennbar.

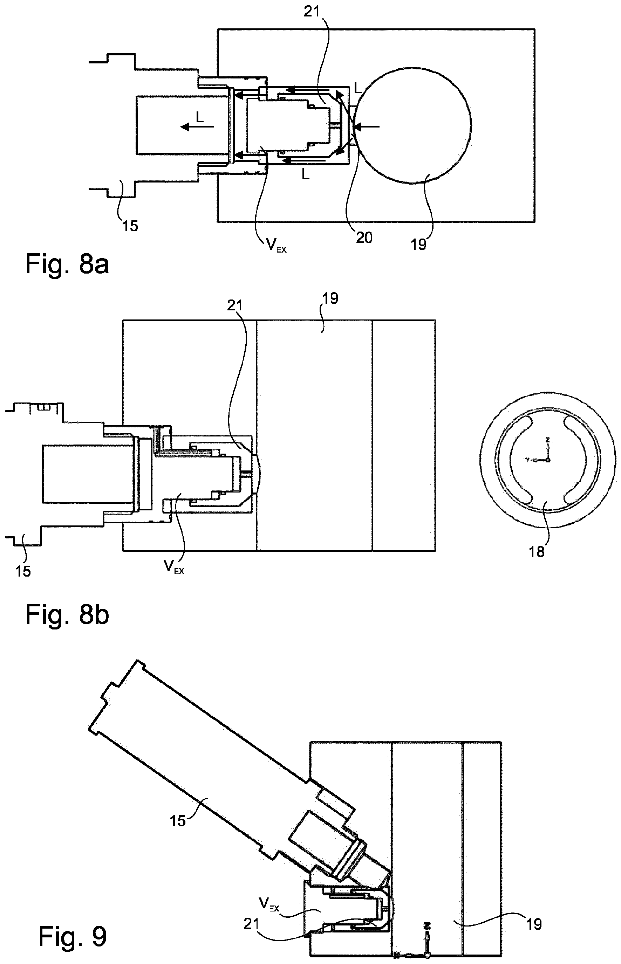

Figur 8a zeigt eine schematische Darstellung einer zweiten erfindungsgemäßen Ausführungsform einer Anordnung eines Schalldämpfers 15 und eines Prozessventils V_{Ex}. Auch in dieser Ausführungsform sind der Schalldämpfer 15 und das Prozessventils V_{Ex} wieder koaxial zueinander angeordnet. Das Bezugszeichen L kennzeichnet auch hier wieder den durch die Pfeile verdeutlichten Luftstrom vom Ventil V_{Ex} in den Schalldämpfer 15.

Anders als in der Figur 7 handelt es sich bei dem Ventilkolben 21 hier nicht um einen Hohlkolben, sondern um einen innengeführten bzw. innenzentrierten Kolben, welcher teilweise druckkompensiert ist. Der Ventilkolben 21 wird wieder von der Druckluft geöffnet und mit Steuerdruck aktiv zugehalten.

Figur 8b zeigt eine weitere schematische Darstellung der zweiten erfindungsgemäßen Ausführungsform. In der rechten vergrößerten Darstellung wird auch hier wieder die nierenförmige Auslassöffnung 18 verdeutlicht.

Figur 9 zeigt eine schematische Darstellung einer dritten erfindungsgemäßen Ausführungsform einer Anordnung eines Schalldämpfers 15 und eines Prozessventils V_{Ex}. Der Schalldämpfer 15 ist hier nicht axial zu dem Ventil V_{Ex} angeordnet, sondern steht im Winkel zu diesem. Bevorzugt beträgt der Winkel zwischen Ventilachse und Schalldämpferachse weniger als 50°.

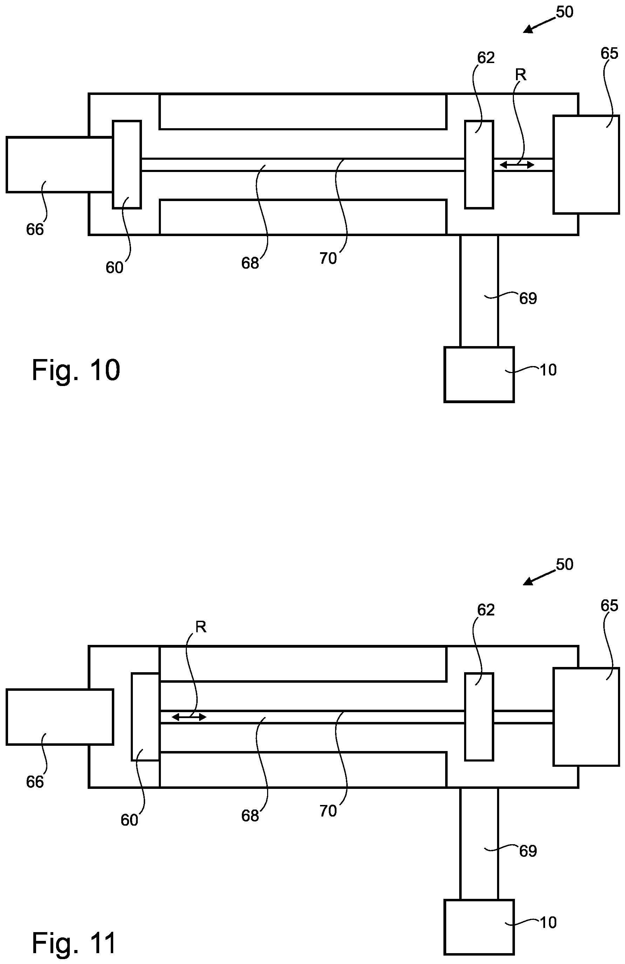

Figur 10 zeigt eine schematische Darstellung einer erfindungsgemäßen Ausführungsform einer Anordnung von verstellbaren Drosseln 60, 62. Es sind dabei zwei Drosseln 60, 62 angeordnet, welche entlang der Pfeile an einer Kolbenstange 70 verschiebbar sind. Je nach Anordnung der Drosseln 60, 62 gelangt entweder mehr oder weniger Luftvolumen 69 von dem in dem Ventilblock 50 vorhandenen Luftvolumen 68 in das Kunststoffbehältnis 10.

Das Bezugszeichen 65 kennzeichnet einen Antrieb, wie beispielsweise einen Motor, mittels welchem die Drosseln 60, 62 entlang der Kolbenstange 70 verschiebbar sind. Das Bezugszeichen 66 kennzeichnet eine Druckluftzuleitung für den Ventilblock 50.

Die in Figur 10 gezeigte Anordnung der Drosseln 60, 62 ist dabei insbesondere vorteilhaft für kleine Kunststoffvorformlinge und Kunststoffbehältnisse.

Figur 11 zeigt eine schematische Darstellung einer weiteren erfindungsgemäßen Ausführungsform einer Anordnung von verstellbaren Drosseln 60, 62. Die Anordnung entspricht dabei der in Figur 10 gezeigten Anordnung. Die hier gezeigte Stellung der Drosseln 60, 62 ist dabei jedoch insbesondere vorteilhaft für größere Kunststoffvorformlinge und Kunststoffbehältnisse.

### Bezugszeichenliste

- 10: Kunststoffbehältnis
- 12: Steuerluftversorgung
- 15: Schalldämpfer
- 18: Auslassöffnung
- 19: Prozessraum
- 20: Ventilsitz, Dichtungseinrichtung
- 21: Ventilkolben
- 50: Ventilblock
- 52: Ventilgrundkörper
- 60: Drossel
- 62: Drossel
- 65: Antrieb
- 66: Druckluftzuleitung
- 68: Luftvolumen
- 69: Luftvolumen
- 70: Kolbenstange
- 100: Diagramm
- 110: Diagramm
- 120: Diagramm
- 130: Druckkurve gemäß Stand der Technik
- 140: Druckkurve gemäß der erfindungsgemäßen Vorrichtung / dem erfindungsgemäßen Verfahren

- A: Pfeil
- T_{R}: Totraum
- L: Luftstrom
- R: Pfeil

- P1: Druck P1, Vorblasdruck
- Pi: Druck Pi, Zwischenstufe
- P+: Druck P+, Zwischenstufe
- P2: Druck P2, Fertigblasdruck
- P_{Ex}: Entlastungsdruck
- V1: Prozessventil
- Vi: Prozessventil
- V+: Prozessventil
- V2: Prozessventil
- V_{Ex}: Prozessventil

## Patentansprüche

1. Vorrichtung zum Umformen von Kunststoffvorformlingen zu Kunststoffbehältnissen (10), mit einer Umformungseinrichtung, welche eine Vielzahl von Umformungsstationen aufweist, welche jeweils eine Blasform aufweisen, innerhalb denen die Kunststoffvorformlinge zu den Kunststoffbehältnissen (10) umformbar sind, wobei die Umformungsstationen jeweils eine Reckstange zum Strecken des Kunststoffvorformlings in dessen Längsrichtung und eine Beaufschlagungseinrichtung, zur Beaufschlagung des Kunststoffbehältnisses (10) mit einem fließfähigen Medium und insbesondere Druckluft aufweisen, wobei die Umformungseinrichtung wenigstens vier Druckreservoirs für das fließfähige Medium aufweist, welche jeweils vorgegebene Drücke (P1, Pi, P+,P2) aufweisen, wobei ein Druck Pi kleiner ist als ein Druck P+ und der Druck P+ kleiner ist als ein Druck P2, und einen Ventilblock (50) mit mindestens fünf Prozessventilen (V1, Vi, V+, V2, V_{Ex}), wobei die Beaufschlagungseinrichtung dazu geeignet und bestimmt ist eine Fluidverbindung zwischen dem Ventilblock (50) und einem Mündungsbereich des Kunststoffvorformlings herzustellen, um die Kunststoffvorformlinge mit dem unter Druck stehenden fließfähigen Medium zu beaufschlagen und die Prozessventile (V1, Vi, V+, V2, V_{Ex}) dazu geeignet und bestimmt sind den Kunststoffvorformling mit unterschiedlichen Drücken zu beaufschlagen, wobei wenigstens ein Prozessventil (V_{Ex}) dazu geeignet und bestimmt ist, eine Verbindung zwischen dem Kunststoffbehältnis und einer Umgebung herzustellen, wobei zwischen dem Druckreservoir (P1) und dem Prozessventil (V1) wenigstens eine Drossel (60, 62) angeordnet ist, deren Durchflussmenge durch einen verstellbaren Drosselquerschnitt bestimmt wird,
**dadurch gekennzeichnet, dass**
der Drosselquerschnitt derart verstellbar ist, dass er größer als 28 mm², vorzugsweise größer als 38 mm² und besonders bevorzugt größer als 52 mm² ist, wobei die wenigstens eine Drossel (60, 62) zwischen mindestens zwei, bevorzugt mindestens vier und besonders bevorzugt mindestens fünf festen Stellungen verstellbar ist, wobei die Verstellung bevorzugt durch einen drehbaren Zylinder mit unterschiedlichen Durchlassbohrungen erzeugbar ist.

2. Vorrichtung nach Anspruch 1,
**dadurch gekennzeichnet, dass**
der Druck (P1) variabel einstellbar ist und bevorzugt kleiner als 8 bar und besonders bevorzugt kleiner als 6 bar ist und bevorzugt größer als 3 bar und besonders bevorzugt größer als 4 bar ist und/oder der Druck (P2) variabel einstellbar ist und bevorzugt größer als 16 bar, bevorzugt größer als 18 bar und besonders bevorzugt größer als 28 bar ist.

3. Vorrichtung nach Anspruch 1,
**dadurch gekennzeichnet, dass**
die Druckreservoirs und der Ventilblock (50) über Leitungen und insbesondere Druckluftleitungen verbunden sind, deren kleinste Querschnitte größer oder gleich 110 mm², bevorzugt größer oder gleich 140 mm² und besonders bevorzugt größer oder gleich 155mm².

4. Vorrichtung nach Anspruch 1,
**dadurch gekennzeichnet, dass**
die Beaufschlagungseinrichtung beweglich im Ventilblock (50) gelagert ist.

5. Vorrichtung nach Anspruch 1,
**dadurch gekennzeichnet, dass**
jede Umformungsstation wenigstens einen Sensor zur Bestimmung eines Drucks aufweist, wobei es sich um einen Druck insbesondere zwischen einen Prozessventil (V1, Vi, V+, V2, V_{Ex}) und dem Kunststoffvorformling handelt.

6. Vorrichtung nach Anspruch 1,
**dadurch gekennzeichnet, dass**
die Vorrichtung genau fünf Prozessventile (V1, Vi, V+, V2, V_{Ex}) aufweist.

7. Vorrichtung nach Anspruch 1,
**dadurch gekennzeichnet, dass**
ein kleinster Strömungsquerschnitt der geöffneten Prozessventile Vi und V+ und/oder V2 und/oder V_{Ex} und/oder zwischen dem Prozessventil und der Beaufschlagungseinrichtung größer oder gleich 150 mm² und bevorzugt größer oder gleich 200 mm² ist.

8. Vorrichtung nach Anspruch 1,
**dadurch gekennzeichnet, dass**
eine Hubbewegung der Beaufschlagungseinrichtung größer ist als 15 mm, bevorzugt größer als 12 mm und bevorzugt größer als 10 mm und kleiner als 60 mm, bevorzugt kleiner als 45 mm und bevorzugt kleiner als 30 mm.

9. Vorrichtung nach Anspruch 1,
**dadurch gekennzeichnet, dass**
es sich bei den Prozessventilen Vi und/oder V+ und/oder V2 und/oder V_{Ex} um pneumatisch vorgesteuerte wenigstens teilkompensierte Sitzventile handelt.

10. Vorrichtung nach Anspruch 1,
**dadurch gekennzeichnet, dass**
die wenigstens eine Drossel (60, 62) händisch, motorisch oder werkzeuglos verstellbar ist, wobei bevorzugt durch die Verstellung der wenigstens einen Drossel (60, 62) ein Volumen zwischen der Drossel (60, 62) und dem Prozessventil (V1) variierbar ist.

11. Verfahren zum Umformen von Kunststoffvorformlingen zu Kunststoffbehältnissen (10) mit einer Umformungseinrichtung, welche eine Vielzahl von Umformungsstationen aufweist, innerhalb denen die Kunststoffvorformlinge zu den Kunststoffbehältnissen umgeformt werden, wobei die Kunststoffvorformlinge mittels einer Reckstange in der Längsrichtung gestreckt werden und mittels einer Beaufschlagungseinrichtung mit einem fließfähigen Medium und insbesondere Druckluft beaufschlagt werden, und wenigstens vier Druckreservoirs vorgesehen sind, welche vorgegebene Drücke (P1, Pi, P+ und P2) aufweisen, wobei ein Druck Pi kleiner ist als ein Druck P+ und der Druck P+ kleiner ist als ein Druck P2 und ein Ventilblock (50) mit mindestens fünf Prozessventilen (V1, Vi, V+, V2, V_{Ex}) vorgesehen ist, wobei die Beaufschlagungseinrichtung eine Fluidverbindung zwischen dem Ventilblock (50) und einem Mündungsbereich des Kunststoffvorformlings herstellt, um die Kunststoffvorformlinge mit dem unter Druck stehenden fließfähigen Medium zu beaufschlagen und die Prozessventile (V1, Vi, V+, V2, V_{Ex}) die Kunststoffvorformlinge mit unterschiedlichen Drücken beaufschlagen, wobei
die Drücke und Schaltzeiten der Prozessventile (V1, Vi, V+, V2, V_{Ex}) so gewählt werden, dass eine Luftmasse die je Kunststoffbehältnis (10) nach einer Recyclingstufe in die Umgebung entlüftet wird
**dadurch gekennzeichnet, dass**
mit der Formel m=x*V beschrieben werden kann, wobei V das Behältervolumen in Liter, m die Luftmasse in Gramm und x einen Faktor des Behältervolumens in Abhängigkeit der Luftmasse beschreibt, wobei 7 ≤ x ≤ 15, bevorzugt 8 ≤ x ≤ 13 und besonders bevorzugt 8.5 ≤ x ≤ 12 gilt, wobei die wenigstens eine Drossel (60, 62) zwischen mindestens zwei, bevorzugt mindestens vier und besonders bevorzugt mindestens fünf festen Stellungen verstellbar ist, wobei die Verstellung bevorzugt durch einen drehbaren Zylinder mit unterschiedlichen Durchlassbohrungen erzeugbar ist.

12. Verfahren nach Anspruch 11,
**dadurch gekennzeichnet, dass**
die Beaufschlagungseinrichtung angehoben wird bevor der Druck in dem Ventilblock (50) einen Überdruck von 0,1 bar, bevorzugt 0,2 bar und besonders bevorzugt 0,5 bar unterschreitet.

13. Verfahren nach Anspruch 11,
**dadurch gekennzeichnet, dass**
Schaltzeiten der Prozessventile (V1, Vi, V+, V2, V_{Ex}) so gewählt werden, dass eine Druckanstiegszeit t90 vom Moment eines Schaltens von Pi bis zum Erreichen von 90% von P2 bei höher 180 ms, bevorzugt höher als 160 ms und besonders bevorzugt höher als 140 ms liegt.

14. Verfahren nach Anspruch 11,
**dadurch gekennzeichnet, dass**
der Druck (P1) variabel eingestellt wird und bevorzugt kleiner als 8 bar und besonders bevorzugt kleiner als 6 bar ist und bevorzugt größer als 3 bar und besonders bevorzugt größer als 4 bar ist und/oder der Druck (P2) variabel eingestellt wird und bevorzugt größer als 16 bar, bevorzugt größer als 18 bar und besonders bevorzugt größer als 28 bar ist.

## Claims

1. An apparatus for forming plastic preforms into plastic containers (10), having a forming device which has a plurality of forming stations which each have a blow mould within which the plastic preforms can be formed into the plastic containers (10), wherein the forming stations each have a stretching rod for stretching the plastic preform in its longitudinal direction and an application device for applying the plastic container (10) with a flowable medium and in particular compressed air, wherein the forming device has at least four pressure reservoirs for the flowable medium, which each have predetermined pressures (P1, Pi, P+, P2), wherein a pressure Pi is smaller than a pressure P+ and the pressure P+ is smaller than a pressure P2, and a valve block (50) with at least five process valves (V1, Vi, V+, V2, V_{Ex}), wherein the application device is suitable and intended to establish a fluid connection between the valve block (50) and a mouth region of the plastic preform, to act upon the plastic preform with the pressurized flowable medium and the process valves (V1, Vi, V+, V2, V_{Ex}) are suitable and intended to act upon the plastic preform with different pressures, wherein at least one process valve (V_{Ex}) is suitable and intended to establish a connection between the plastic container and an environment, wherein
at least one throttle (60, 62) is arranged between the pressure reservoir (P1) and the process valve (V1), the flow rate of which throttle is determined by an adjustable throttle cross-section,
**characterised in that**
the throttle cross-section being adjustable in such a way that it is larger than 28 mm², preferably larger than 38 mm² and particularly preferably larger than 52 mm², wherein the at least one throttle (60 ,62) is adjustable between at least two, preferably at least four and particularly preferably at least five fixed positions, wherein the adjustment can preferably be generated by a rotatable cylinder with different through holes.

2. The apparatus according to claim 1,
**characterised in that**
the pressure (P1) is variably adjustable and is preferably less than 8 bar and particularly preferably less than 6 bar and preferably greater than 3 bar and particularly preferably greater than 4 bar and/or the pressure (P2) is variably adjustable and is preferably greater than 16 bar, preferably greater than 18 bar and particularly preferably greater than 28 bar.

3. The apparatus according to claim 1,
**characterised in that**
the pressure reservoirs and the valve block (50) are connected via lines and in particular pressure lines whose smallest cross-sections are greater than or equal to 110 mm², preferably greater than or equal to 140 mm² and particularly preferably greater than or equal to 155 mm².

4. The apparatus according to claim 1,
**characterised in that**
the application device is movably mounted in the valve block (50).

5. The apparatus according to claim 1,
**characterised in that**
each forming station comprises at least one sensor for determining a pressure, wherein this is a pressure in particular between a process valve (V1, Vi, V+, V2, V_{Ex}) and the plastic preform.

6. The apparatus according to claim 1,
**characterised in that**
the apparatus has exactly five process valves (V1, Vi, V+, V2, V_{Ex}).

7. The apparatus according to claim 1,
**characterised in that**
a smallest flow cross-section of the opened process valves Vi and V+ and/or V2 and/or V_{Ex} and/or between the process valve and the application device is greater than or equal to 150 mm² and preferably greater than or equal to 200 mm².

8. The apparatus according to claim 1,
**characterised in that**
a stroke movement of the application device is greater than 15 mm, preferably greater than 12 mm and preferably greater than 10 mm and less than 60 mm, preferably less than 45 mm and preferably less than 30 mm.

9. The apparatus according to claim 1,
**characterised in that**
the process valves Vi and/or V+ and/or V2 and/or V_{Ex} are pneumatically pilot-controlled at least partially compensated seat valves.

10. The apparatus according to claim 1,
**characterised in that**
the at least one throttle (60, 62) can be adjusted manually, by motor or without tools, wherein preferably a volume between the throttle (60, 62) and the process valve (V1) can be varied by adjusting the at least one throttle (60, 62).

11. A method for forming plastic preforms into plastic containers (10), having a forming device which has a plurality of forming stations within which the plastic preforms are formed into the plastic containers, wherein the plastic preforms being stretched in the longitudinal direction by a stretching rod and being acted upon by an application device with a flowable medium and in particular compressed air, and at least four pressure reservoirs being provided which have predetermined pressures (P1, Pi, P+ and P2), wherein a pressure Pi is smaller than a pressure P+ and the pressure P+ is smaller than a pressure P2 and a valve block (50) with at least five process valves (V1, Vi, V+, V2, V_{Ex}) is provided, wherein the application device produces a fluid connection between the valve block (50) and a mouth region of the plastic preform, to act upon the plastic preforms with the pressurised flowable medium and the process valves (V1, Vi, V+, V2, V_{Ex}) act upon the plastic preforms with different pressures, wherein
the pressures and switching times of the process valves (V1, Vi, V+, V2, V_{Ex}) are selected in such a way that an air mass which is vented into the environment per plastic container (10) after a recycling stage **characterised in that**
can be described with the formula m=x*V, wherein V describes the container volume in litres, m the air mass in grams and x a factor of the container volume as a function of the air mass, wherein 7 ≤ x ≤ 15, preferably 8 ≤ x ≤ 13 and particularly preferably 8.5 ≤ x ≤ 12, wherein the at least one throttle (60 ,62) is adjustable between at least two, preferably at least four and particularly preferably at least five fixed positions, wherein the adjustment can preferably be generated by a rotatable cylinder with different through holes.

12. The method according to claim 11,
**characterised in that**
the application device is raised before the pressure in the valve block (50) falls below an overpressure of 0.1 bar, preferably 0.2 bar and particularly preferably 0.5 bar.

13. The method according to claim 11,
**characterised in that**
switching times of the process valves (V1, Vi, V+, V2, V_{Ex}) are selected so that a pressure rise time t90 from the moment of switching Pi to reaching 90% of P2 is higher than 180 ms, preferably higher than 160 ms, and particularly preferably higher than 140 ms.

14. The method according to claim 11,
**characterised in that**
the pressure (P1) is variably adjusted and is preferably less than 8 bar and particularly preferably less than 6 bar and preferably greater than 3 bar and particularly preferably greater than 4 bar and/or the pressure (P2) is variably adjusted and is preferably greater than 16 bar, preferably greater than 18 bar and particularly preferably greater than 28 bar.

## Revendications

1. Dispositif de façonnage de préformes en matière plastique en des récipients en matière plastique (10), avec un système de façonnage, lequel présente une pluralité de stations de façonnage, lesquelles présentent respectivement un moule de soufflage, à l'intérieur desquels les préformes en matière plastique peuvent être façonnées en les récipients en matière plastique (10), dans lequel les stations de façonnage présentent respectivement une tige d'étirage destinée à étirer la préforme en matière plastique dans son sens longitudinal et un système de sollicitation destiné à exposer le récipient en matière plastique (10) à l'action d'un milieu pouvant s'écouler et en particulier à l'action d'air comprimé, dans lequel le système de façonnage présente au moins quatre réservoirs de pression pour le milieu pouvant s'écouler, lesquels présentent respectivement des pressions prédéfinies (P1, Pi, P+, P2), dans lequel une pression Pi est inférieure à une pression P+ et la pression P+ est inférieure à une pression P2, et un bloc de soupapes (50) avec au moins cinq soupapes de traitement (V1, Vi, V+, V2, V_{EX}), dans lequel le système de sollicitation est adapté pour et se destine à établir une communication fluidique entre le bloc de soupapes (50) et une zone d'embouchure de la préforme en matière plastique pour exposer les préformes en matière plastique à l'action du milieu pouvant s'écouler sous pression et les soupapes de traitement (V1, Vi, V+, V2, V_{Ex}) sont adaptées pour et se destinent à exposer la préforme en matière plastique à l'action de pressions différentes, dans lequel au moins une soupape de traitement (V_{EX}) est adaptée pour et se destine à établir une communication entre le récipient en matière plastique et un environnement, dans lequel
au moins un clapet d'étranglement (60, 62) est disposé entre le réservoir de pression (P1) et la soupape de traitement (V1), dont le débit est défini par une section transversale d'étranglement pouvant être ajustée, **caractérisé en ce que**
la section transversale d'étranglement peut être ajustée de telle manière qu'elle est supérieure à 28 mm², de préférence est supérieure à 38 mm² et est de manière particulièrement préférée supérieure à 52 mm², dans lequel l'au moins un clapet d'étranglement (60, 62) peut être ajusté entre au moins deux, de manière préférée au moins quatre et de manière particulièrement préférée au moins cinq positions fixes, dans lequel l'ajustement peut être généré de manière préférée par un cylindre rotatif avec différents alésages de passage.

2. Dispositif selon la revendication 1,
**caractérisé en ce que**
la pression (P1) peut être réglée de manière variable et est de manière préférée inférieure à 8 bar et est de manière particulièrement préférée inférieure à 6 bar et est de manière préférée supérieure à 3 bar et est de manière particulièrement préférée supérieure à 4 bar, et/ou la pression (P2) peut être réglée de manière variable et est de manière préférée supérieure à 16 bar, est de manière préférée supérieure à 18 bar et est de manière particulièrement préférée supérieure à 28 bar.

3. Dispositif selon la revendication 1,
**caractérisé en ce que**
les réservoirs de pression et le bloc de soupapes (50) sont reliés par l'intermédiaire de conduits et en particulier de conduits à air comprimé, dont les sections transversales les plus petites sont supérieures ou égales à 110 mm², sont de manière préférée supérieures ou égales à 140 mm² et sont de manière particulièrement préférée supérieures ou égales à 155 mm².

4. Dispositif selon la revendication 1,
**caractérisé en ce que**
le système de sollicitation est monté de manière mobile dans le bloc de soupapes (50).

5. Dispositif selon la revendication 1,
**caractérisé en ce que**
chaque station de façonnage présente au moins un capteur destiné à définir une pression, dans lequel il s'agit d'une pression en particulier entre une soupape de traitement (V1, Vi, V+, V2, V_{Ex}) et la préforme en matière plastique.

6. Dispositif selon la revendication 1,
**caractérisé en ce que**
le dispositif présente précisément cinq soupapes de traitement (V1, Vi, V+, V2, V_{EX}).

7. Dispositif selon la revendication 1,
**caractérisé en ce que**
une section transversale d'écoulement la plus petite des soupapes de traitement ouvertes Vi et V+ et/ou V2 et/ou V_{EX} et/ou entre la soupape de traitement et le système de sollicitation est supérieure ou égale à 150 mm² et est de manière préférée supérieure ou égale à 200 mm².

8. Dispositif selon la revendication 1,
**caractérisé en ce que**
un déplacement de levage du système de sollicitation est supérieur à 15 mm, est de manière préférée supérieur à 12 mm et est de manière préférée supérieur à 10 mm et est inférieur à 60 mm, est de manière préférée inférieur à 45 mm et est de manière préférée inférieur à 30 mm.

9. Dispositif selon la revendication 1,
**caractérisé en ce que**
les soupapes de traitement Vi et/ou V+ et/ou V2 et/ou V_{EX} sont des soupapes à siège précommandées de manière pneumatique, au moins en partie compensées.

10. Dispositif selon la revendication 1,
**caractérisé en ce que**
l'au moins un clapet d'étranglement (60, 62) peut être ajusté manuellement, de manière motorisée ou sans outil, dans lequel un volume entre le clapet d'étranglement (60, 62) et la soupape de traitement (V1) peut varier de manière préférée par l'ajustement de l'au moins un clapet d'étranglement (60, 62).

11. Procédé de façonnage de préformes en matière plastique en des récipients en matière plastique (10) avec un système de façonnage, lequel présente une pluralité de stations de façonnage, à l'intérieur desquelles les préformes en matière plastique sont façonnées en les récipients en matière plastique, dans lequel les préformes en matière plastique sont étirées au moyen d'une tige d'étirage dans le sens longitudinal et sont sollicitées au moyen d'un système d'exposition à l'action d'un milieu pouvant s'écouler et en particulier à l'action d'air comprimé, et au moins quatre réservoirs de pression sont prévus, lesquels présentent des pressions (P1, Pi, P+ et P2) prédéfinies, dans lequel une pression Pi est inférieure à une pression P+ et la pression P+ est inférieure à une pression P2 et un bloc de soupapes (50) est prévu avec au moins cinq soupapes de traitement (V1, Vi, V+, V2, V_{EX}), dans lequel le système de sollicitation établit une communication fluidique entre le bloc de soupapes (50) et une zone d'embouchure de la préforme en matière plastique pour exposer les préformes en matière plastique à l'action du milieu pouvant s'écouler sous pression et les soupapes de traitement (V1, Vi, V+, V2, V_{EX}) exposent les préformes en matière plastique à l'action de différentes pressions, dans lequel
les pressions et temps de commutation des soupapes de traitement (V1, Vi, V+, V2, V_{EX}) sont choisis de telle sorte qu'une masse d'air par récipient en matière plastique (10) est évacuée dans l'environnement après une étape de recyclage,
**caractérisé en ce que**
peut être décrit avec la formule m = x * V, dans lequel V décrit le volume de contenant en litres, m décrit la masse d'air en grammes, et x décrit un facteur du volume de contenant en fonction de la masse d'air, dans lequel s'applique 7 ≤ x ≤ 15, de manière préférée 8 ≤ x ≤ 13 et de manière particulièrement préférée 8,5 ≤ x ≤ 12, dans lequel l'au moins un clapet d'étranglement (60, 62) peut être ajusté entre au moins deux, de manière préférée au moins quatre et de manière particulièrement préférée au moins cinq positions fixes, dans lequel l'ajustement peut être généré de manière préférée par un cylindre rotatif avec différents alésages de passage.

12. Procédé selon la revendication 11,
**caractérisé en ce que**
le système de sollicitation est relevé avant que la pression dans le bloc de soupapes (50) ne dépasse pas une surpression de 0,1 bar, de manière préférée de 0,2 bar et de manière particulièrement préférée de 0,5 bar.

13. Procédé selon la revendication 11,
**caractérisé en ce que**
des temps de commutation des soupapes de traitement (V1, Vi, V+, V2, V_{EX}) sont choisis de telle sorte qu'une durée d'augmentation de pression t90 depuis le moment d'une commutation de Pi jusqu'à l'atteinte de 90 % de P2 est de l'ordre d'une durée supérieure à 180 ms, de manière préférée supérieure à 160 ms et de manière particulièrement préférée supérieure à 140 ms.

14. Procédé selon la revendication 11,
**caractérisé en ce que**
la pression (P1) est réglée de manière variable et est de manière préférée inférieure à 8 bar et de manière particulièrement préférée est inférieure à 6 bar et de manière préférée est supérieure à 3 bar et de manière particulièrement préférée est supérieure à 4 bar et/ou la pression (P2) est réglée de manière variable et est de manière préférée supérieure à 16 bar, est de manière préférée supérieure à 18 bar et est de manière particulièrement préférée supérieure à 28 bar.
